# EUROPEAN PATENT APPLICATION

(11) **EP 1 758 232 A1**
(43) Date of publication of application: **28.02.2007**
(21) Application number: 05255184.3
(22) Date of filing: 23.08.2005
(51) Int. Cl.: H02K 44/08, H02K 44/26

(54) **Electric Power Generator**

(71) Applicant: Kuo, Ching-Hui, Tornluo Hsiang Miao-Li Hsien (TW); Kuo, Che Yu, Tornluo Hsiang Miao-Li Hsien (TW)
(72) Inventor: Kuo, Ching-Hui, Tornluo Hsiang Miao-Li Hsien (TW); Kuo, Che Yu, Tornluo Hsiang Miao-Li Hsien (TW)
(74) Representative: Gee, Steven William

(57) **Abstract**

A power generator using batteries to drive the generator to rotate for power generation, and using the generated power to recharge the batteries is provided. The power generator includes a battery set to provide power to rotate a starting motor. The starting motor is connected to a first link device, which is connected to a first generator. The rotation of the starting motor enables, through the first link device, the rotation of the first generator to generate power for other electrical devices. The first generator, through a second link device, enables a second generator to rotate and generates power when the first generator is in operation. The power generated by the second generator recharges the battery set so that the power generation efficiency is improved.

## Description

### FIELD OF THE INVENTION

The present invention generally relates to a generator, and more specifically to a power generator using battery to drive the generator and recharging the battery using the generated power.

### BACKGROUND OF THE INVENTION

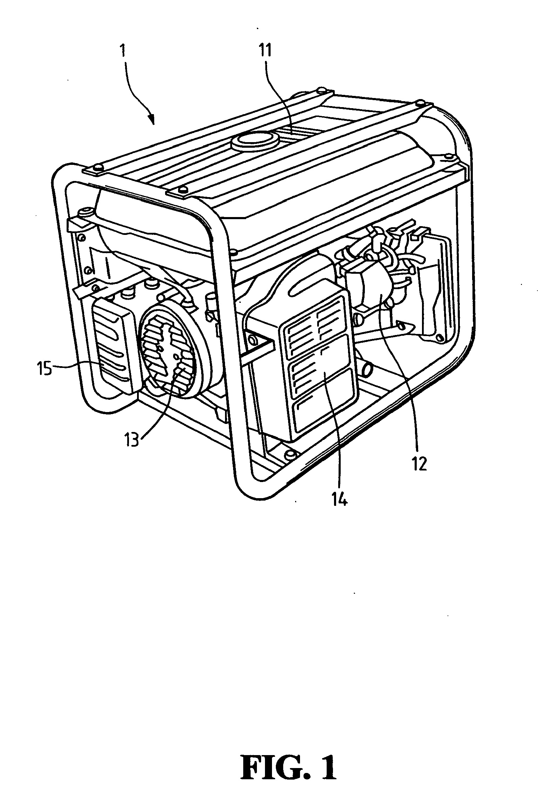

Conventional power generators are gasoline or diesel power generators employing electromagnetic induction. By the combustion of gasoline or diesel to activate the rotation of the generator coil, the chemical energy is transformed into kinetic energy, which is then transformed into electrical energy for output as power supply. FIG. 1 shows a conventional gasoline/diesel power generator 1, including a fuel tank 11, an engine 12, a starting motor 13, a muffler 14 and an air filter 15. Fuel tank 11 contains gasoline/diesel for activating engine 12. Engine 12 starts the rotation of starting motor 13. Starting motor 13 includes magnet and inductive coil. The inductive coil rotates within the magnetic field of the magnet to generate electrical source, as specified by Faraday's law of electromagnetic induction.

Gasoline/diesel power generator 1 consumes the fuel (gasoline or diesel) to generate power. The production of fuel is considered a highly polluting process, which has a great environmental impact On the other hand, when the power generator operates, the associated air pollution and the noise caused by fuel combustion further affects the environment. Therefore, the conventional gasoline/diesel power generators include muffler 14 and air filter 15 to reduce the potential impact on the environment. However, these preventive mechanisms of limited use and the environmental impact remains a major concern.

Furthermore, when power generator operates, the transformation process of chemical energy to kinetic energy, then to electrical energy is usually inefficient, and some of the kinetic energy is lost during the transformation process. This is not only expensive, but also a waste of energy source.

### SUMMARY OF THE INVENTION

The present invention has been made to overcome the above-mentioned drawbacks of conventional gasoline/diesel power generators that need to consume fuel for power generation, such as air pollution, noises, and inefficiency. The primary object of the present invention is to provide a power generator using a battery to provide the driving power for the power generator, while recharging the battery using the generated power. This cyclic power transformation process can achieve the goals of high efficiency and energy source-saving.

The power generator of the present invention includes a battery set, a starting motor, a first link device, a first generator, a second generator, and a second link device. The battery set further includes a first battery and a second battery serially connected. The starting motor is connected, in parallel, to the battery set, which provides driving power to the starting motor. The starting motor is connected to a screw rod at one end. The first link device includes a gear, which meshes with the screw rod. The first generator is linked to the starting motor by the first link device for rotation. The second generator is connected, in parallel, to the battery set and the starting motor. The second link device includes a first belt wheel, a second belt wheel and a belt. The first belt wheel is connected to the first generator, and the second belt wheel is connected to the second generator. The belt links the first belt wheel and the second belt wheel for transmission.

The major difference between the power generator of the present invention and the conventional power generators is the use of the power provided by the battery set to start the rotation of the first generator and the second generator. First, the power from the battery set starts the starting motor, which starts to rotate. The rotation of the starting motor enables the rotation of the first generator through the connected screw rod and the gear of the first link device. The first generator generates power, as expressed by the electromagnetic induction theory, which can be used as supply to other electrical devices. In the mean time, the rotation of the first generator enables, through the first belt wheel, the belt and the second belt wheel of the second link device, the second generator to rotate and generate power. Because the output of the second generator is connected to the battery set in parallel, the battery set is recharged. When the battery set is recharged, its power can be used to drive the first generator, which will enable the second generator to rotate, and finally leads to the recharge of the battery set. Although a certain amount of energy loss will occur during the cyclic power generation power, the present invention reduces the kinetic loss and improves the power generation efficiency. Therefore, the reduction of the cost of power generation.

On the other hand, the power generator of the present invention does not consume gasoline/diesel for power generation; thus, the environmental problems of noises and air pollution accompanied by the conventional fuel power generators are avoided.

The foregoing and other objects, features, aspects and advantages of the present invention will become better understood from a careful reading of a detailed description provided herein below with appropriate reference to the accompanying drawings.

### BRIEF DESCRIPTION OF THE DRAWINGS

The present invention can be understood in more detail by reading the subsequent detailed description in conjunction with the examples and references made to the accompanying drawings, wherein:
FIG. 1 shows a schematic view of a conventional gasoline/diesel power generator;
FIG. 2 shows a schematic view of a power generator of the present invention;
FIG. 3 shows an exploded view of the present invention; and
FIG. 4 shows a schematic view of the wiring of the present invention.

### DETAILED DESCRIPTION OF THE PREFERRED EMBODIMENTS

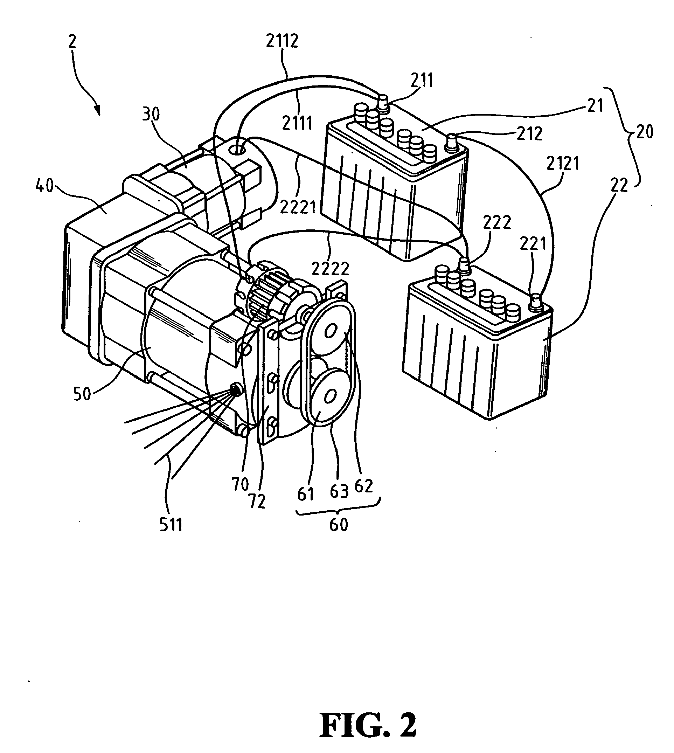

FIG. 2 shows a schematic view of the present invention. A power generator 2 of the present invention includes a battery set 20, a starting motor 30, a first link device 40, a first generator 50, a second link device 60, and a second generator 70. Battery set 20 is connected and provides power to starting motor 30. The rotation of starting motor 30 enables, through first link device 40, first generator 50 to rotate and generate power. The rotation of first generator 50 also enables, through second link device 60, second generator 70 to rotate and generate power. The power generated by second generator 70 is used to recharge battery set 20.

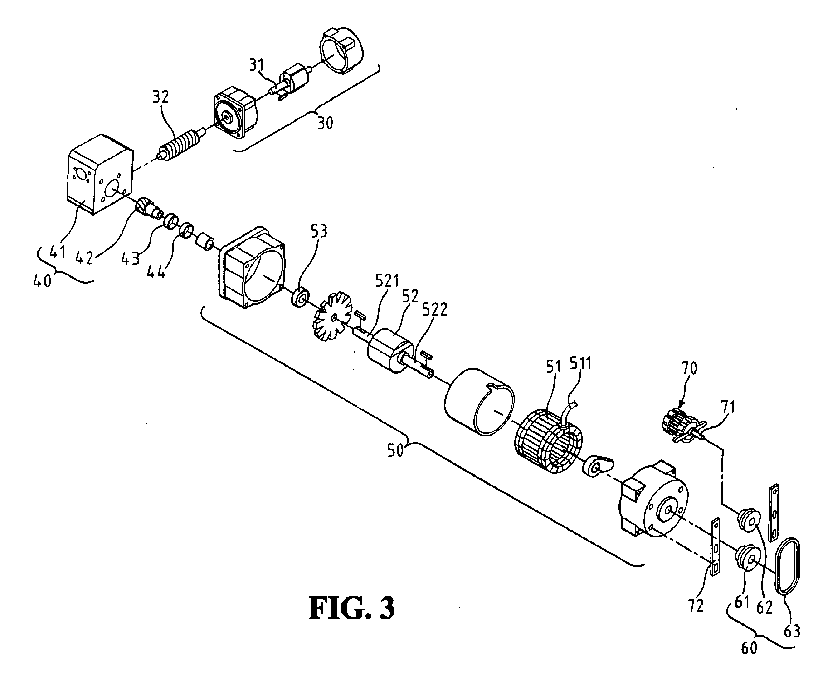

Refer to FIG. 2 and FIG. 3. FIG. 3 shows an exploded view of the present invention. The power supplied to power generator 2 of the present invention is from battery set 20. Battery set 20 includes a first battery 21 and a second battery 22, serially connected. First battery 21 is electrically connected to starting motor 30 through a first wire 2111. Starting motor 30 rotates by the power supplied by battery set 20. Battery set 20 can be battery of any voltage or type. The embodiment uses the 12-volt batteries. The voltage after the serial connection is 24 volts. Starting motor 30 can be a regular brushless motor, whose first shaft 31 includes a screw rod 32 at one end.

First link device 40 includes a gear housing 41 and a gear rod 42 engaged to gear housing 41. First link device 40 is connected to screw rod 32 of starting motor 30, and gear rod 42 is meshed with screw rod 32 when first link device 40 and starting motor 30 are assembled. Therefore, the rotation of starting motor 30 enables the rotation of gear rod 42. Screw rod 32 can also prevent the decrease of the rotation speed of first generator 50 and stabilizes the rotation speed when the load is too large.

First generator 50 is connected to first link device 40. First generator 50 includes a fixed coil 51 and an inner coil rotor 52. By rotating coiled inner coil rotor 52 within fixed coil 51 with magnets, the power can be generated through the electromagnetic induction. The generated power is then outputted from power output wire 511 of fixed coil 51 to provide power to electrical devices. Power output wire 511 may include single-phase 110V output wire, single-phase 220V output wire, or three-phase 220 output wire. Inner coil rotor 52 includes a second shaft 521 and a third shaft 522. Second shaft 521 is connected to gear rod 42 of first link device 40. Therefore, when the rotation of starting motor 30 enables the rotation of gear rod 42 of first link device 40, inner coil rotor is enabled to rotate. That is, first generator 50 is driven to rotate and generate power. To reduce the kinetic loss during the link transmission and improve the efficiency of energy transformation, one end of gear rod 42 can be engaged between a first bearing 43 and a second bearing 44, and second shaft 521 of inner coil rotor 52 is engaged within third bearing 53 so that the rotation will be smoother.

By the rotation of inner coil rotor 52 of first generator 60, the kinetic energy provided by starting motor 30 is transformed into electrical energy, which achieves the object of power generation, according to electromagnetic induction. However, the rotation kinetic energy of inner coil rotor 52 is not utilized so far. To improve the efficiency for power generation, the present invention provides an additional mechanism to utilize the rotation kinetic energy of inner coil rotor 52 to drive another generator to generate additional power.

A second link device 60 and a second generator 70 are used for this purpose. Second link device 60 is connected between first generator 50 and second generator 70. Second generator 70 is fixed to first generator 50 using two fixed elements 72. Second link device 60 includes a first belt wheel 61, a second belt wheel 62 and a belt 63. First belt wheel 61 is connected to third shaft 533 of inner coil rotor 52 of first generator 50, and second belt wheel 62 is connected to a fourth shaft 71 of second generator 70. First belt wheel 61 and second belt wheel 62 are linked together through belt 63. When inner coil rotor 52 rotates, through the link between first belt wheel 61 and second belt wheel 62, second generator 70 also rotates to generate power.

Second generator 70 of this embodiment is a generator generating a 24-volt voltage, in order to match the voltage of battery set 20. Similarly, if battery set 20 provides different voltage outputs, second generator 70 can match to output the same voltages. The power generated by second generator 70 is guided through a fifth wire 2222 to second battery 22 so that both first battery 21 and battery 22 can be recharged simultaneously.

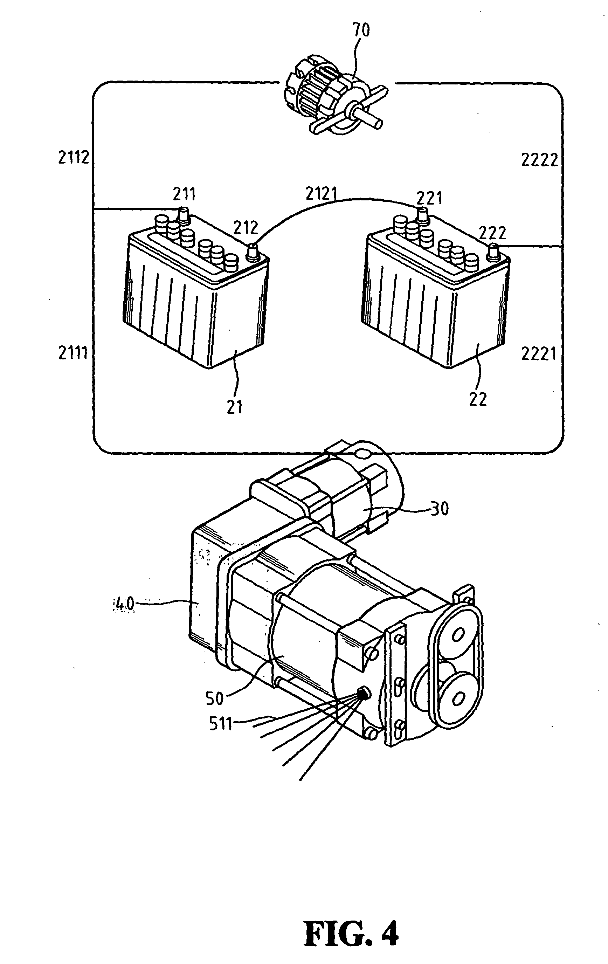

Refer to FIG. 2 and FIG. 4. FIG.4 shows a schematic view of the wiring of the present invention. Battery set 20 is formed by a first battery 21 serially connected to a second battery 22. First battery 21 includes a first cathode 211 and a first anode 212, and second battery 22 includes a second cathode 221 and a second anode 222. First cathode 211 is connected to a first wire 2111, which is connected to starting motor 30, and a second wire 2112, which is connected to second generator 2112. A third wire 2121 is connected between first anode 212 and second cathode 221. Second anode 222 is connected to a fourth wire 2221, which is connected to starting motor 30, and a fifth wire 2222, which is connected to second generator. Therefore, second generator 70 is connected to both starting motor 30 and battery set 20 in parallel.

The power provided by battery set 20 to rotate starting motor 30 is compensated by the power generated by second generator 70 to prolong the rotation time of starting motor. During the power generation process, second generator 70 also plays the role of battery set 20 to provide power for the rotation of starting motor 30. The power provided by battery set 20 to rotate starting motor 30 is recollected through the power generated by second generator 70. Therefore, the present invention provides a better efficiency of power generation and avoids the pollution problems incurred in conventional power generators using fuels, such as gasoline or diesel.

Although the present invention has been described with reference to the preferred embodiments, it will be understood that the invention is not limited to the details described thereof. Various substitutions and modifications have been suggested in the foregoing description, and others will occur to those of ordinary skill in the art. Therefore, all such substitutions and modifications are intended to be embraced within the scope of the invention as defined in the appended claims.

## Claims

1. A power generator, comprising:
a battery set, further comprising a first battery and a second battery, said first battery and said second battery being serially connected;
a starting motor, connected to said battery set in parallel, said battery set providing driving power to said starting motor, one end of said starting motor being connected to a screw rod;
a first link device, further comprising a gear, said gear meshing with said screw rod;
a first generator, linked to said starting motor through said first link device for rotation;
a second generator, connected to said battery set and said starting motor in parallel; and
a second link device, further comprising a first belt wheel connected to said first generator, a second belt wheel connected to said second generator, and a belt connected said first belt wheel and said second belt wheel for transmission.

2. The power generator as claimed in claim 1, wherein said first battery and said second battery provides 12-volt output voltage, respectively, and said second generator outputs 24-volt voltage.

3. The power generator as claimed in claim 1, wherein said first battery further comprises a first cathode and a first anode, said second battery further comprises a second cathode and a second anode, where said first cathode is connected to a first wire connected to said starting motor and a second wire connected to said second generator, said first anode and said second cathode are connected with a third wire, and said second anode is connected to a fourth wire connected to said starting motor and a fifth wire connected to said second generator.

4. The power generator as claimed in claim 1, wherein said starting motor is a brushless motor.

5. The power generator as claimed in claim 1, wherein said first generator is connected to a plurality of power output wires.

6. The power generator as claimed in claim 5, wherein said plurality of power output wires comprises a plurality of single-phase 110-volt output wire.

7. The power generator as claimed in claim 5, wherein said plurality of power output wires comprises a plurality of single-phase 220-volt output wire.

8. The power generator as claimed in claim 5, wherein said plurality of power output wires comprises a plurality of three-phase 220-volt output wire.

9. The power generator as claimed in claim 1, wherein said second generator is fixed to said first generator by at least a fixed element.
